(19) Europäisches Patentamt / European Patent Office / Office européen des brevets

(11) **EP 2 945 912 B1**

(12) **FASCICULE DE BREVET EUROPEEN**

(45) Date de publication et mention
de la délivrance du brevet:
**18.09.2019 Bulletin 2019/38**

(21) Numéro de dépôt: **14703435.9**

(22) Date de dépôt: **16.01.2014**

(51) Int Cl.:
*C02F 3/30* (2006.01)  *C02F 9/14* (2006.01)
*C02F 101/16* (2006.01)

(86) Numéro de dépôt international:
**PCT/IB2014/058331**

(87) Numéro de publication internationale:
**WO 2014/111878 (24.07.2014 Gazette 2014/30)**

(54) **PROCÉDÉ DE TRAITEMENT D'EFFLUENTS CONTENANT DE L'AZOTE SOUS FORME D'AMMONIUM**

VERFAHREN ZUR BEHANDLUNG VON EFFLUENZEN MIT STICKSTOFF IN AMMONIUMFORM

PROCESS FOR TREATING EFFLUENTS CONTAINING NITROGEN IN AMMONIUM FORM

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **18.01.2013 FR 1350447**

(43) Date de publication de la demande:
**25.11.2015 Bulletin 2015/48**

(73) Titulaire: **SUEZ International
92040 Paris La Défense (FR)**

(72) Inventeur: **GRAVELEAU, Laure
F-94260 Fresnes (FR)**

(74) Mandataire: **IPAZ
16, rue Gaillon
75002 Paris (FR)**

(56) Documents cités:
**WO-A1-2012/085288    WO-A2-2009/080912**

**Description**

L'invention est relative à un procédé de traitement d'effluents contenant de l'azote sous forme d'ammonium, mettant en oeuvre un réacteur biologique séquentiel, procédé du genre selon lequel :

- un volume d'effluents à traiter dans un cycle complet est introduit dans le réacteur biologique, en une ou plusieurs fractions volumiques successives, chaque fraction volumique étant traitée au cours d'un sous-cycle,
- chaque sous-cycle comprend une phase d'alimentation par une fraction volumique, et au moins une première étape aérée, au cours de laquelle a lieu une oxydation totale ou partielle de l'ammonium en nitrites par injection d'air ou d'oxygène dans l'effluent,
- une étape de décantation et de vidange ayant lieu après la fin du cycle complet.

Généralement, dans chaque sous-cycle, la première étape aérée est suivie d'une deuxième étape non aérée, en anoxie, au cours de laquelle les nitrites produits et l'ammonium sont convertis en azote gazeux par dé-ammonification, sans apport de substrat carboné.

Le traitement de l'ammonium par nitrification et dé-ammonification représente une voie assez récente de traitement particulièrement intéressante par les gains énergétiques qu'elle engendre par rapport à un traitement plus conventionnel par nitrification et dénitrification.

Un tel traitement est prévu dans la demande de brevet internationale WO 2009/080912 selon laquelle la régulation de l'aération pendant l'étape de nitrification partielle est basée sur des consignes maxi et mini en oxygène dissous dans l'effluent contenu dans le réacteur biologique.

L'expérience du démarrage de l'étape de nitrification partielle a montré qu'il était souhaitable d'apporter des améliorations au contrôle de cette étape afin de la maîtriser plus rapidement. Il est souhaitable également d'améliorer le contrôle de l'efficacité de l'étape non aérée en anoxie.

L'invention a pour but, surtout, d'améliorer la régulation et la maîtrise des réactions de nitrification partielle et de dé-ammonification dans un réacteur biologique séquencé. Ces deux réactions mises en oeuvre de manière successive permettent un traitement poussé de l'azote ammoniacal tout en réduisant la consommation d'énergie que ce soit sous forme d'oxygène ou de carbone externe.

Chacune de ces deux réactions nécessite des conditions spécifiques afin de garantir un traitement complet dans un cadre industriel où les risques de dérive sont importants.

Selon l'invention, le procédé de traitement d'effluents contenant de l'azote sous forme d'ammonium, mettant en oeuvre un réacteur biologique séquentiel, procédé selon lequel :

- un volume d'effluents à traiter dans un cycle complet est introduit dans le réacteur biologique, en une ou plusieurs fractions volumiques successives, chaque fraction volumique étant traitée au cours d'un sous-cycle,
- chaque sous-cycle comprend une étape d'alimentation par une fraction volumique, et au moins une première étape aérée, au cours de laquelle a lieu une oxydation totale ou partielle de l'ammonium en nitrites par injection d'air ou d'oxygène dans l'effluent,
- une étape de décantation et de vidange ayant lieu après la fin du cycle complet,

caractérisé en ce que :

- la masse en N-NH$_4$ à traiter est déterminée à partir du volume d'effluents dans le réacteur en fin d'étape d'alimentation, et de la différence entre la concentration initiale en N-NH$_4$ mesurée dans le réacteur et une concentration souhaitée en fin de l'étape aérée, la concentration en N-NH$_4$ souhaitée en fin de l'étape aérée étant comprise entre 40% et 60% de la concentration initiale en N-NH$_4$,
- un temps maximum d'aération T$_M$ est dédié à l'étape aérée, le temps TM étant fixé, choisi en fonction de la durée totale du cycle du réacteur biologique séquentiel SBR et du nombre de sous-cycles,
- et un débit d'air initial Qair$_{init}$, pour le démarrage de l'étape aérée, est déterminé en tenant compte de la masse en N-NH$_4$ à traiter et du temps maximum d'aération T$_M$, selon la formule suivante :

$$Qair_{init} = k \times \text{masse en N-NH}_4 \text{ à traiter} \times 60 / T_M$$

avec :

Qair$_{init}$= débit initial d'air à appliquer, en Nm$^3$/h (m$^3$ normaux par heure)

k = coefficient compris entre 0,1 et 0,5,

masse en $N-NH_4$ à traiter, exprimée en grammes

$T_M$ exprimé en minutes

et, dans le cas d'une injection d'oxygène, le débit d'oxygène est déduit de $Qair_{init}$ et de la teneur de l'air en oxygène ;

- pendant l'étape aérée après un certain temps d'aération, la concentration en nitrates dépasse une valeur maximale admissible de 4 mg/L et le débit d'air injecté est réduit
- au cours de toute la période d'aération restante, le calcul du débit d'air Qair est ajusté en fonction de la valeur de la concentration en oxygène résiduel maintenue dans une plage définie, comprise entre 0,1 mg $O_2$/L et 0,6 mg $O_2$/L, ladite valeur de la concentration en oxygène résiduel étant elle-même ajustée de sorte que l'écart entre la valeur moyenne à un instant du traitement de l'étape aérée, et la valeur initiale de la concentration en nitrates, ne soit pas significatif, un écart étant considéré comme significatif lorsqu'il correspond à une augmentation de la concentration en nitrates d'au moins 2 mg/L après 10 minutes d'aération, la condition d'aération est maintenue jusqu'à ce que la concentration souhaitée en N-NH4 soit atteinte, ou que le temps maximum d'aération TM soit atteint.

Le temps $T_M$ est fixé en fonction de la durée totale du cycle du réacteur biologique séquentiel SBR et du nombre de sous-cycles. De manière générale, le temps d'aération représente approximativement 30% du temps total d'un cycle de 8 heures comportant 4 sous-cycles.

La valeur de k est estimée expérimentalement en fonction de l'activité des bactéries et de la concentration en matières en suspension (MES) dans l'effluent contenu dans le réacteur.

Pendant l'étape aérée, le calcul du débit d'air Qair est ajusté au cours de toute la période d'aération restante en fonction de la valeur de la concentration en oxygène résiduel. La concentration en oxygène résiduel dissous est maintenue dans une plage définie, comprise entre 0.1 mg $O_2$/L et 0.6 mg $O_2$/L.

La condition d'aération, c'est-à-dire le fonctionnement des équipements d'apport en air ou en oxygène, est maintenue jusqu'à ce que la concentration souhaitée en $N-NH_4$, ou concentration minimale, soit atteinte, ou que le temps maximum d'aération $T_M$ soit atteint.

La concentration en $N-NH_4$ souhaitée en fin de l'étape aérée est comprise entre 40% et 60% de la concentration initiale en $N-NH_4$

Le coefficient k est avantageusement choisi avec une valeur moyenne comprise entre 0.1 et 0.25.

Généralement, dans chaque sous-cycle, la première étape aérée est suivie d'une deuxième étape non aérée, en anoxie, au cours de laquelle les nitrites produits et l'ammonium sont convertis en azote gazeux par dé-ammonification, sans apport de substrat carboné.

Pour éviter que des réactions biologiques se produisent pendant les étapes de décantation et de vidange, le dernier sous-cycle peut être effectué en tenant compte des résultats des sous-cycles précédents :

- si la charge admise lors des sous-cycles précédents a été traitée en totalité, l'évaluation étant faite d'après la concentration en ammonium à la fin de l'avant-dernier sous-cycle, qui de préférence doit être inférieure ou égale à 5mg/L (valeur minimale traduisant un bon traitement et compatible avec la sensibilité de la mesure), une nouvelle charge d'ammonium est introduite lors de l'étape d'alimentation du dernier sous-cycle pour traitement, en aération puis anoxie,
- tandis que, si la charge admise lors des sous-cycles précédents n'a été que partiellement traitée, et que la concentration en ammonium résiduel est importante, de préférence supérieure à 5mg/L, le dernier sous-cycle est utilisé pour traiter cette charge résiduelle, sans phase d'alimentation.

Le procédé défini précédemment est mis en oeuvre dans une installation pour le traitement d'effluents contenant de l'ammonium, comportant un réacteur biologique séquentiel, et un ensemble d'équipements associés au réacteur comprenant :

- un dispositif d'alimentation du réacteur biologique en effluent, en une ou plusieurs fractions volumiques successives,
- des moyens d'aération placés au fond du réacteur et reliés à une source d'air ou d'oxygène sous pression,
- au moins un moyen d'agitation mécanique, dans le réacteur,
- un système d'évacuation d'eau traitée, à partir du réacteur,
- un système d'extraction de boues en excès,
- et différents capteurs situés dans l'effluent à traiter afin de déterminer la charge en azote à traiter et le nombre de séquences de traitement à effectuer,

caractérisée en ce qu'elle comporte :

- au moins un capteur pour la mesure de la concentration en ammonium N-NH$_4$ dans le réacteur biologique séquentiel,
- et un moyen de calcul pour :

  - prendre en compte un temps maximum d'aération T$_M$ dédié à l'étape aérée,
  - déterminer la masse en N-NH$_4$ à traiter à partir du volume d'effluents dans le réacteur en fin de phase d'alimentation, et de la différence entre la concentration initiale en N-NH$_4$ dans le réacteur et une concentration souhaitée en fin de l'étape aérée,
  - et déterminer un débit d'air initial Qair$_{init}$, pour le début de l'étape aérée en tenant compte de la masse en N-NH$_4$ à traiter et du temps maximum d'aération T$_M$.

Le moyen de calcul est programmé pour déterminer un débit d'air initial Qair$_{init}$ selon la formule suivante :

$$Qair_{init} = k \times \text{masse en N-NH}_4 \text{ à traiter} \times 60 / T_M$$

avec :

Qair$_{init}$ = débit initial d'air à appliquer, en Nm$^3$/h (m$^3$ normaux par heure)
k = coefficient compris entre 0.1 et 0.5, de préférence entre 0.1 et 0.25
masse en N-NH$_4$ à traiter, exprimée en grammes
T$_M$ exprimé en minutes
et, dans le cas d'une injection d'oxygène, le débit d'oxygène est déduit de Qair$_{init}$ et de la teneur de l'air en oxygène.

L'invention consiste, mises à part les dispositions exposées ci-dessus, en un certain nombre d'autres dispositions dont il sera plus explicitement question ci-après à propos d'exemples de réalisation décrits avec référence aux dessins annexés, mais qui ne sont nullement limitatifs. Sur ces dessins :

  Fig. 1 est une coupe verticale schématique d'une installation pour mettre en oeuvre le procédé selon l'invention avec réacteur séquentiel biologique.
  Fig. 2 est un diagramme illustrant les variations des concentrations en N-NH$_4$, N-NO$_2$, N-NO$_3$, le débit d'air insufflé et la concentration en oxygène dissous dans le réacteur, en fonction du temps porté en abscisse.
  Fig. 3 est un diagramme semblable à celui de Fig. 2 pour les mêmes composés, illustrant la régulation de la production de nitrites.
  Fig. 4 est un diagramme illustrant quatre sous-cycles successifs au cours desquels la charge en ammonium apportée lors de l'étape d'alimentation a été traitée en fin de sous-cycle, et
  Fig. 5 est un diagramme illustrant trois sous-cycles successifs au cours desquels la charge en ammonium n'a pas été complètement traitée, et un quatrième sous-cycle pour traiter le reste de charge en ammonium.

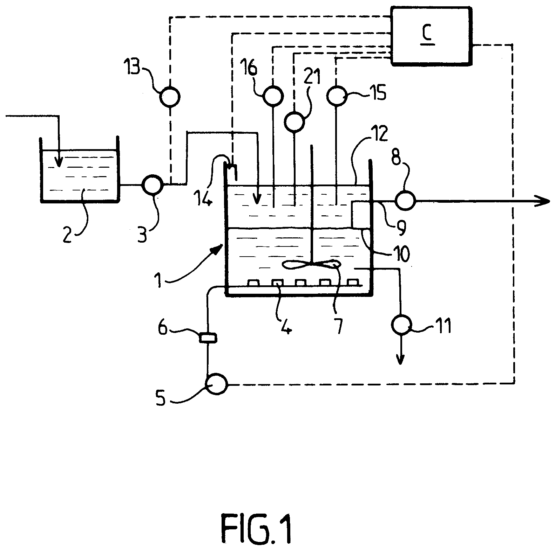

En se reportant à Fig. 1 des dessins, on peut voir une installation de traitement de l'ammonium par nitrification et dé-ammonification, qui comprend un réacteur biologique séquentiel 1, sous forme d'un bassin, avec en amont un bassin tampon 2 dans lequel est stocké, si nécessaire, de l'effluent à traiter.
L'installation comprend également :

- un dispositif d'alimentation 3 du réacteur biologique en effluents, en particulier sous forme d'une pompe dont l'aspiration est reliée à la partie inférieure du bassin 2 et dont le refoulement débite dans une conduite débouchant dans le réacteur 1 ;
- des moyens d'aération 4, notamment formés par des buses, placés au fond du réacteur 1 et reliés à une source d'air sous pression 5 par l'intermédiaire d'une électrovanne 6.

En variante, les moyens d'aération 4 pourraient injecter dans le réacteur de l'oxygène, ou de l'air enrichi en oxygène.
Au moins un moyen d'agitation mécanique 7 est prévu dans le réacteur 1. L'évacuation de l'eau traitée, à partir du réacteur 1, est assurée par un système constitué notamment d'une pompe 8 et d'une conduite 9 formant tube plongeur jusqu'à un niveau 10 dans le réacteur.
Un système d'extraction de boues en excès comporte une pompe 11 dont l'aspiration est reliée à la partie inférieure du réacteur, et dont le refoulement débite dans une conduite de rejet.
Dans le réacteur 1, les fractions d'effluents à traiter sont délivrées soit en une fois, soit de préférence de manière successive à l'aide du dispositif 3. Elles s'ajoutent au volume biologique du réacteur, défini par un niveau minimal 10, jusqu'à atteindre un niveau maximum 12. Le volume hydraulique admis au cours d'un cycle de traitement correspond à la différence entre le niveau maximum 12 et le niveau minimum 10. Ce volume hydraulique est versé par fractions successives, correspondant aux différentes séquences ou sous-cycles de traitement.

Après réalisation d'un cycle de traitement, et d'une étape de décantation à la fin, la vidange de l'eau traitée est assurée par le système d'évacuation dédié 8 qui fait passer du niveau 12 au niveau 10. Les boues produites en excès sont évacuées, si nécessaire, à la fin du cycle de traitement à l'aide du système 11.

L'installation comporte en outre un débitmètre 13 installé sur le refoulement de la pompe 3 pour permettre de calculer, avec une mesure du temps en parallèle, le volume d'effluents injecté dans le réacteur 1 pour chaque sous-cycle. Le réacteur 1 est équipé d'un détecteur 14 du niveau de l'effluent, ce qui permet de déterminer le volume d'effluents dans le réacteur 1.

Un capteur ou sonde 15 est installé dans le réacteur pour plonger dans l'effluent, et en mesurer la concentration en ammonium N-NH$_4$. La sonde 15 peut être constituée par un analyseur d'ammonium, ou par une sonde à membrane sélective.

Au moins un capteur 16 est prévu dans le réacteur 1 pour mesurer la concentration de l'oxygène dissous O$_2$ dans l'effluent. D'autres capteurs peuvent être prévus pour déterminer la conductivité de l'effluent, la température et/ou le pH dans le réacteur 1, et, le cas échéant, dans le bassin de stockage 2, dans l'eau traitée, et dans l'eau de rejet.

Les différents capteurs sont reliés à des moyens de calcul constitués par un ordinateur ou contrôleur C qui intègre les mesures en temps réel et permet le déroulement des cycles de traitement en mode automatique.

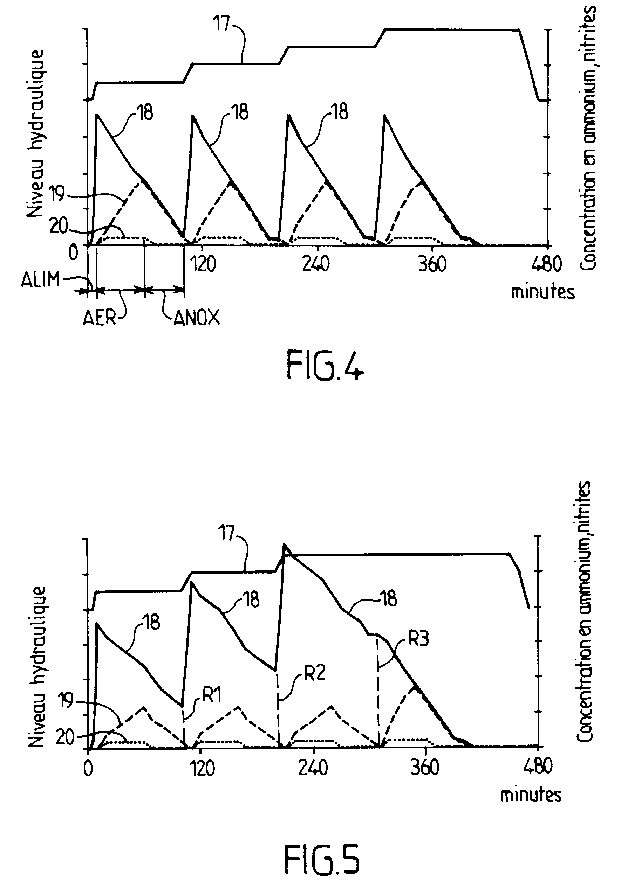

Le traitement des effluents est illustré par le diagramme de Fig. 4 sur lequel le temps en minutes est porté en abscisse, tandis que le niveau hydraulique dans le réacteur 1 est porté sur l'axe de gauche des ordonnées. Ce niveau hydraulique est illustré par la courbe en gradins 17, en trait plein. Sur l'axe des ordonnées situé à droite sont portées : la concentration en ammonium, illustrée par les courbes en trait plein 18, en dents de scie; la concentration en nitrites illustrée par les courbes en tirets 19. Les phases d'aération sont illustrées par les courbes en pointillés 20.

Le diagramme de Fig. 4 correspond au traitement d'un volume d'effluents d'un cycle complet avec quatre sous-cycles correspondant à l'introduction de quatre fractions volumiques successives dans le réacteur 1.

Chaque sous-cycle comprend une phase d'alimentation indiquée par le segment ALIM pour la première dent de scie 18 ; une première étape aérée indiquée par le segment AER au cours de laquelle a lieu une oxydation de l'ammonium en nitrites, par injection d'air ou d'oxygène dans l'effluent du réacteur 1 ; une deuxième étape non aérée indiquée par le segment ANOX au cours de laquelle les nitrites produits et l'ammonium sont convertis en azote gazeux.

Le niveau hydraulique 17 augmente d'un gradin, comme visible sur Fig. 4, à chaque introduction d'une fraction volumique. En fin de cycle, le volume traité est évacué et le niveau hydraulique revient au niveau de départ.

Les procédés traitant l'ammonium grâce aux réactions de nitrification partielle et de dé-ammonification mettent en oeuvre deux réactions distinctes très différentes rappelées ci-après

*Nitrification partielle*

Cette transformation de l'ammonium en nitrites a lieu en présence d'oxygène non limitant par des bactéries nitritantes (AOB), selon l'équation :

$$NH_4^+ + 1.5O_2 \rightarrow NO_2 \rightarrow + H_2O + 2H^+$$

*Réaction de dé-ammonification*

Cette transformation a lieu selon l'équation :

$$NH_4^+ + 1.32\ NO_2^- + 0.066\ HCO_3^- + 0.13H^+ \rightarrow 1.02\ N_2 + 0.26\ NO_3^- + 0.066\ CH_2O_{0.5}N_{0.15} + 2.03\ H_2O$$

On remarque, à partir des équations, que la première réaction convertit l'ammonium NH$_4$ en nitrites NO$_2$, tandis que la seconde réaction combine l'ammonium et les nitrites pour former de l'azote gazeux N$_2$ et des nitrates NO$_3$.

Le rendement de la première réaction est fonction de plusieurs éléments parmi lesquels :

- l'activité des bactéries impliquées,
- la présence d'oxygène,
- la concentration en NH$_4$, et
- l'absence d'inhibiteur.

Le rendement de la seconde réaction est fonction de plusieurs éléments parmi lesquels :

- l'activité des bactéries impliquées,
- les conditions de milieu, en particulier absence d'oxygène libre, alcalinité suffisante,
- la concentration des deux substrats $NH_4$ et $NO_2$, et
- l'absence d'inhibiteur.

Concernant la concentration des deux substrats $NH_4$ et $NO_2$, il faut, d'une part, que ces substrats soient en concentration suffisante, et d'autre part, qu'ils soient en concentration relative satisfaisante pour permettre leur élimination totale. On remarque, d'après l'équation de dé-ammonification, qu'il est nécessaire que le ratio molaire $NO_2$ / $NH_4$ soit de l'ordre de 1,32.

La concentration en N-$NH_4$ souhaitée en fin de l'étape aérée est comprise entre 40% et 60% de la concentration initiale en N-$NH_4$ La concentration en fin d'étape est régie par la stoechiométrie de la réaction de dé-ammonification qui a besoin de 1.32 $NO_2$ pour 1 $NH_4$; l'azote N de $NO_2$ représente 0.56% de l'azote N total, d'où le pourcentage entre 40 et 60%.

La concentration en N-$NH_4$ souhaitée en fin de l'étape aérée est comprise entre 40% et 60% de la concentration initiale en N-$NH_4$.

Dans le cas d'un procédé assurant le traitement de l'ammonium selon les deux réactions correspondant aux équations fournies précédemment, on remarque l'importance d'une bonne régulation des deux étapes correspondantes.

Selon le procédé de l'invention, ce contrôle du traitement de l'ammonium est obtenu par une régulation dynamique et fine de l'apport en air, ou en oxygène.

La régulation est prévue pour satisfaire à plusieurs conditions, dont les suivantes :

- permettre la nitrification partielle, c'est-à-dire ne pas autoriser l'oxydation des nitrites en nitrates,
- permettre d'atteindre, en fin d'étape aérée, le ratio : $NO_2$ produit / $NH_4$ résiduel satisfaisant aux conditions de la réaction de dé-ammonification.

Dans le cas d'une mise en oeuvre du traitement de l'ammonium dans un réacteur biologique séquentiel ou SBR, l'ensemble des étapes de traitement est réalisé au sein d'un même réacteur assurant dans un premier temps la fonction de traitement, étape aérée et/ou étape non aérée en anoxie, et la fonction de décantation/vidange.

Pour faciliter les conditions d'exploitation d'un tel réacteur, il est avantageux de fonctionner avec des périodes de temps fixes pour chacune de ces étapes ou phases, ces périodes de temps étant déterminées en fonction des objectifs de traitement.

L'invention a pour but d'établir des règles de fonctionnement d'un tel réacteur SBR, et les consignes de régulation pour satisfaire les conditions de traitement. La régulation porte à la fois sur la première étape aérée, et sur la deuxième étape non aérée, en anoxie.

*Régulation de la première étape aérée*

Cette étape aérée fait suite à une phase d'alimentation en effluents à traiter. Au démarrage de cette étape, la charge à traiter est fonction de la concentration initiale de l'effluent dans le réacteur 1 et du volume admis lors de la phase d'alimentation. Ces deux paramètres sont amenés à varier au cours du temps.

La masse, ou charge, en N-$NH_4$ à traiter, lors de l'étape aérée, est déterminée à partir du volume d'effluent contenu dans le réacteur 1 en fin de la phase d'alimentation, et de la différence entre la concentration initiale en N-$NH_4$ de l'effluent dans le réacteur 1, et une concentration souhaitée en fin de l'étape aérée, pour laquelle un temps maximum d'aération $T_M$ est dédié.

Le volume d'effluent contenu dans le réacteur est déterminé à partir du niveau d'effluent fourni par le détecteur de niveau 14.

La concentration en ammonium de l'effluent dans le réacteur 1 est estimée soit manuellement par prélèvement d'un échantillon et analyse en laboratoire, soit de préférence par le capteur en ligne 15. En fonction de l'objectif de traitement, la concentration souhaitée à atteindre en fin de période d'aération est déterminée par un opérateur. Cette concentration est comprise entre 40 % et 60 % de la concentration initiale en N-$NH_4$.

Le temps maximum d'aération $T_M$ est choisi par l'opérateur qui conduit le traitement, et est généralement compris entre 30 et 45 minutes.

Le débit d'air initial $Qair_{init}$ est alors déterminé selon la formule :

$$Qair_{init} = k \times \text{masse en N-NH4 à traiter} \times 60 / T_M$$

$Qair_{init}$ est exprimé en $Nm^3/h$

La masse en N-NH4 à traiter est exprimée en grammes.

Le temps $T_M$ est exprimé en minutes.

La valeur du coefficient k est comprise entre 0.1 et 0.5, avec de préférence une valeur moyenne comprise entre 0.1 et 0.25.

Dans le cas où de l'oxygène est injecté à la place de l'air, le débit d'oxygène est déduit du débit d'air calculé Qair en appliquant un coefficient réducteur correspondant à la teneur en oxygène de l'air, ce coefficient réducteur pouvant être pris égal à 0.21. Dans le cas d'air enrichi en oxygène, le coefficient réducteur sera adapté à la concentration en oxygène.

La condition d'aération, qui correspond au fonctionnement des équipements 4 d'apport en air, est maintenue jusqu'à ce qu'une concentration minimale en N-NH$_4$ soit atteinte, ou que le temps maximum d'aération $T_M$ soit atteint.

Pendant l'étape aérée, le calcul du débit d'air Qair est ajusté au cours de toute la période d'aération restante en fonction de la valeur de la concentration en oxygène résiduel. La concentration en oxygène résiduel dissous est maintenue dans une plage définie, comprise entre 0.1 mg $O_2$/L et 0.6 mg $O_2$/L.

Si la valeur de la concentration en oxygène dissous, fournie par le capteur 16, se trouve en dehors de la plage comprise entre la valeur minimale et la valeur maximale, le débit d'air est ajusté en fonction des concentrations maxi et mini en oxygène. Le débit d'air Qair est diminué lorsque la valeur de la concentration en oxygène dissous est supérieure à la valeur de consigne max, tandis que le débit d'air Qair est augmenté lorsque la valeur de la concentration en oxygène dissous est inférieure à la valeur de consigne mini.

Selon le mode fonctionnement choisi par l'opérateur, la masse de N-NH$_4$ à traiter peut être estimée comme un pourcentage de la masse présente dans le réacteur 1 en fin de période d'alimentation, ou être de grandeur fixe (dans le cas d'un effluent présentant une concentration stable dans le temps).

Le réacteur 1 est avantageusement équipé d'un capteur 21 de mesure de la concentration des nitrates. Ce capteur 21 peut être un analyseur en ligne ou une sonde à membrane sélective. L'information fournie sur la concentration en nitrates est utilisée pour ajuster la consigne en oxygène résiduel pendant l'étape aérée.

L'air fourni est utilisé pour l'oxydation de l'ammonium en nitrites, mais des concentrations élevées en oxygène dissous peuvent favoriser dans certaines conditions l'oxydation des nitrites en nitrates, ce qui est à proscrire dans le cas d'un traitement par nitrification partielle dé-ammonification. Ce peut être le cas, en particulier, lors de la phase de démarrage du procédé où l'activité des bactéries nitritantes, produisant des nitrates, peut être importante. Leur activité sera réduite par une concentration en oxygène résiduel faible, inférieure à 0.6 mg $O_2$/L pendant l'étape aérée.

La concentration en nitrates peut être utilisée pour modifier la consigne en oxygène résiduel. A cet effet, la concentration en nitrates au début de l'étape aérée est enregistrée, puis est comparée régulièrement à la valeur moyenne en nitrates mesurée au cours de l'étape aérée. Si un écart significatif est observé entre la valeur moyenne à un instant du traitement de l'étape aérée, et la valeur initiale de la concentration en nitrates, la consigne en oxygène résiduel maximum est réduite d'une valeur de 0.1 mg/L. Un écart est considéré comme significatif lorsqu'il correspond à une augmentation de la concentration en nitrates d'au moins 2 mg/L après 10 minutes d'aération (lié à la sensibilité du capteur en ligne).

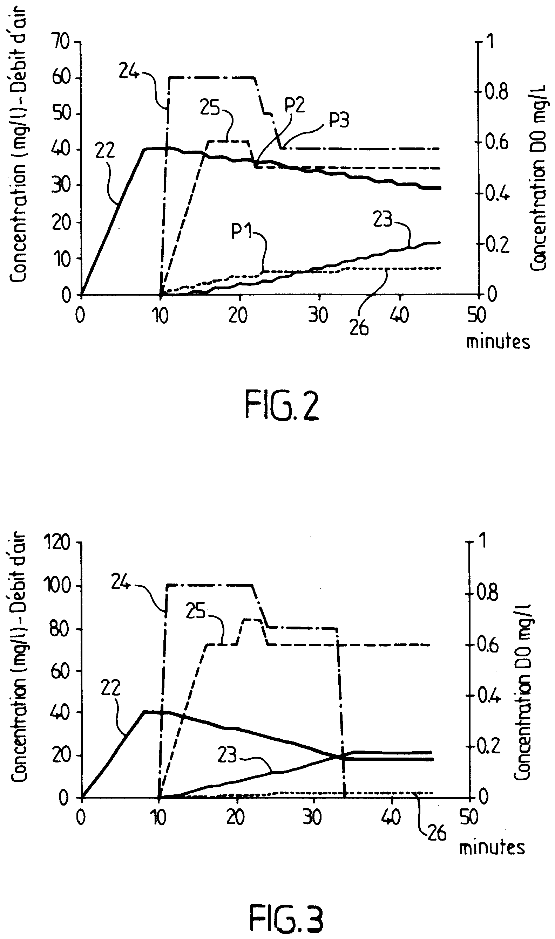

Le schéma de régulation complet est présenté à l'aide du graphique de Fig. 2.

*Démarrage de la nitrification partielle*

Sur le graphique de Fig. 2 ont été portées, en ordonnée sur l'échelle de gauche, des concentrations en mg/L pour N-NH$_4$, N-NO$_2$ et N-NO$_3$, Le débit d'air injecté est également porté en ordonnée, mais sans indication de valeurs car la gamme de débit d'air sera fonction du volume du réacteur ; à titre d'information, pour un volume à traiter de 1 m3, la gamme de débit d'air serait de l'ordre de 4 à 6 Nm3/h.

Le temps exprimé en minutes est porté en abscisse.

Sur l'axe des ordonnées situé à droite sont portées les concentrations en mg/L de l'oxygène dissous DO.

Les variations de la concentration en N-NH$_4$ sont représentées par la courbe 22 en trait plein ; les variations de la concentration en nitrites N-NO$_2$ sont représentées par la courbe 23 en trait plein ; les variations du débit d'air en Nm$^3$/h sont représentées par la courbe 24 en trait mixte; les variations de la concentration en oxygène dissous sont représentées par la courbe 25 en tirets ; et les variations de la concentration en nitrates N-NO$_3$ sont représentées par la courbe 26, également en tirets.

La courbe 22 de concentration en N-NH$_4$ présente une partie initiale ascendante correspondant à la phase d'alimentation du réacteur par une fraction d'effluents à traiter. L'injection d'air illustrée par la courbe 24 provoque, avec un léger retard, la diminution de la concentration en N-NH$_4$ et une augmentation de la concentration en nitrites N-NO$_2$ illustrée par la courbe 23.

Après un certain temps d'aération, la concentration en nitrates NO$_3$ au point P1 dépasse une valeur maximale admissible d'environ 4 mg/L, ce qui traduit un apport en air trop important pour l'installation de la nitrification partielle.

En conséquence, la consigne en oxygène dissous maximum est réduite, selon le point P2 ce qui entraîne la réduction du débit d'air injecté, au point P3. Cette action corrective permet de réduire le taux de formation des nitrates.

*Régulation de la production de nitrites*

Le graphique de Fig. 3, exemple hors invention, illustre, de manière semblable à Fig. 2, avec les mêmes grandeurs portées en ordonnée et avec le temps porté en abscisse, un exemple de régulation de la production de nitrites.

En fin de période d'alimentation, la concentration en N-NH$_4$ correspondant au maximum de la courbe 22 est utilisée pour :

- déterminer le débit d'air initial Qair$_{init}$ à appliquer pendant l'étape aérée,
- déterminer la concentration en N-NH$_4$ souhaitée en fin d'étape aérée, ou « concentration cible » ; lorsque cette concentration sera atteinte, l'aération sera arrêtée.

Le débit d'air est en outre ajusté en fonction de la concentration en oxygène résiduel ou oxygène dissous.

D'après le graphique de Fig. 3, exemple hors invention, il apparaît que la concentration initiale en N-NH$_4$ est d'environ 40 mg/L. Vers la fin de l'étape aérée, cette concentration est d'environ 20 mg/L, tandis que la concentration en nitrites N-NO$_2$ est légèrement supérieure, sensiblement 24 mg/L.

La concentration en oxygène dissous est maintenue à environ 0.6 mg/L avant et après un créneau à environ 0.7 mg/L. La concentration en nitrates est maintenue à un niveau réduit, inférieur à 2 mg/L.

*Régulation de l'étape non aérée, en anoxie*

Une dérive parfois observée sur les procédés biologiques de traitement réside en ce qu'une partie des réactions n'a pu être réalisée pendant la phase de traitement, ce qui entraîne des perturbations lors de la phase de décantation/vidange de l'eau traitée.

C'est en particulier la situation lorsque les réactions produisent des substrats sous forme gazeuse, ce qui entraîne une remontée des matières en suspension pendant la phase de décantation et leur rejet avec l'eau traitée.

Dans le cas d'un procédé de traitement de l'ammonium par nitrification partielle et dé-ammonification, la dernière étape non aérée, en anoxie, permet la consommation de l'ammonium et des nitrites, et la production de di-azote (sous forme gazeuse) et de nitrates (sous forme soluble).

Selon le cycle du réacteur SBR, les étapes de traitement, étape aérée et étape non aérée, peuvent être rassemblées en une seule période (ou 1 sous-cycle) ou fractionnées en plusieurs sous-cycles, chaque sous-cycle comprenant une phase d'alimentation et les deux étapes de traitement aérée et non aérée en anoxie.

Cette configuration présente plusieurs avantages et l'invention apporte une amélioration à ce type de fonctionnement.

La réaction mise en oeuvre dans l'étape non aérée, en anoxie, consomme deux sortes d'azote, l'ammonium et les nitrites selon une stoechiométrie connue avec un ratio molaire NO$_2$/NH$_4$ proche de 1,5. La réaction est arrêtée lorsque l'un des deux substrats est totalement consommé. Dans ce cas, ce sont bien souvent les nitrites qui sont limitants, car ils sont en effet produits par l'activité biologique des bactéries nitritantes, dépendantes des conditions de fonctionnement du procédé.

L'invention apporte une amélioration pour éviter que des réactions biologiques aient lieu pendant les étapes de décantation et de vidange.

Pour cela, la dernière étape de traitement, en particulier le dernier sous-cycle d'un cycle de traitement, est réalisée en tenant compte des résultats des sous-cycles précédents. L'évaluation de ces résultats est effectuée à partir de la concentration en ammonium de l'effluent dans le réacteur 1 à la fin de l'avant-dernier sous-cycle.

Si, à la fin de l'avant-dernier sous-cycle, la concentration en N-NH$_4$ est suffisamment faible, notamment inférieure à 5 mg/L, il apparaît que la charge admise en N-NH$_4$ lors des sous-cycles précédents a été traitée quasiment en totalité ; le dernier sous-cycle peut donc traiter une nouvelle fraction d'effluents chargés en ammonium qui sera délivrée par une phase d'alimentation usuelle, puis traitée par l'étape aérée et l'étape non aérée.

Cette configuration correspond à celle du graphique de Fig. 4. A la fin du troisième sous-cycle, la concentration en ammonium N-NH$_4$ correspondant à l'extrémité inférieure de la troisième dent de scie 18 est inférieure à la limite souhaitée, et un quatrième sous-cycle est enclenché, semblable au sous-cycle précédent, avec alimentation en une fraction d'effluents à traiter.

Par contre, si la charge en N-NH4 admise lors des sous-cycles précédents n'a été que partiellement traitée, comme illustré par le graphique de Fig. 5, à la fin de chaque sous-cycle une charge résiduelle R1, R2, R3 en ammonium subsiste. Cette charge résiduelle augmente d'un sous-cycle au suivant. La mesure de la concentration en ammonium à la fin du troisième sous-cycle fait apparaître une charge résiduelle R3 relativement importante, et supérieure à la limite souhaitée, par exemple de 5 mg/L. Pour le dernier sous-cycle, aucune phase d'alimentation en effluents à traiter n'aura lieu, mais l'étape aérée, suivie de l'étape non aérée, sera appliquée à la charge résiduelle R3 pour aboutir, en fin de dernier sous-cycle, à une concentration réduite en ammonium, de préférence inférieure à 5 mg/L

L'invention s'applique au traitement des effluents chargés en ammonium par nitrification partielle, couplée ou non à une étape de dé-ammonification.

L'invention peut concerner tout effluent contenant de l'ammonium.

## Revendications

1. Procédé de traitement d'effluents contenant de l'azote sous forme d'ammonium, mettant en oeuvre un réacteur biologique séquentiel, procédé selon lequel :

   - un volume d'effluents à traiter dans un cycle complet est introduit dans le réacteur biologique, en une ou plusieurs fractions volumiques successives, chaque fraction volumique étant traitée au cours d'un sous-cycle,
   - chaque sous-cycle comprend une étape d'alimentation par une fraction volumique, et au moins une première étape aérée, au cours de laquelle a lieu une oxydation totale ou partielle de l'ammonium en nitrites par injection d'air ou d'oxygène dans l'effluent,
   - une étape de décantation et de vidange ayant lieu après la fin du cycle complet,

   **caractérisé en ce que** :

   - la masse en N-NH$_4$ à traiter est déterminée à partir du volume d'effluents dans le réacteur en fin d'étape d'alimentation, et de la différence entre la concentration initiale en N-NH$_4$ mesurée dans le réacteur et une concentration souhaitée en fin de l'étape aérée, la concentration en N-NH$_4$ souhaitée en fin de l'étape aérée étant comprise entre 40% et 60% de la concentration initiale en N-NH$_4$,
   - un temps maximum d'aération T$_M$ est dédié à l'étape aérée, le temps TM étant fixé, choisi en fonction de la durée totale du cycle du réacteur biologique séquentiel SBR et du nombre de sous-cycles,
   - et un débit d'air initial Qair$_{init}$ pour le démarrage de l'étape aérée, est déterminé en tenant compte de la masse en N-NH$_4$ à traiter et du temps maximum d'aération T$_M$, selon la formule suivante :

   $$Qair_{init} = k \times \text{masse en N-NH}_4 \text{ à traiter} \times 60 \, /T_M$$

   avec :

   Qair$_{init}$ = débit initial d'air à appliquer, en Nm$^3$/h (m$^3$ normaux par heure)
   k = coefficient compris entre 0,1 et 0,5,
   masse en N-NH$_4$ à traiter, exprimée en grammes
   T$_M$ exprimé en minutes
   et, dans le cas d'une injection d'oxygène, le débit d'oxygène est déduit de Qair$_{init}$ et de la teneur de l'air en oxygène ;

   - pendant l'étape aérée après un certain temps d'aération, la concentration en nitrates dépasse une valeur maximale admissible de 4 mg/L et le débit d'air injecté est réduit
   - au cours de toute la période d'aération restante, le calcul du débit d'air Qair est ajusté en fonction de la valeur de la concentration en oxygène résiduel maintenue dans une plage définie, comprise entre 0,1 mg O$_2$/L et 0,6 mg O$_2$/L, ladite valeur de la concentration en oxygène résiduel étant elle-même ajustée de sorte que l'écart entre la valeur moyenne à un instant du traitement de l'étape aérée, et la valeur initiale de la concentration en nitrates, ne soit pas significatif, un écart étant considéré comme significatif lorsqu'il correspond à une augmentation de la concentration en nitrates d'au moins 2 mg/L après 10 minutes d'aération, la condition d'aération est maintenue jusqu'à ce que la concentration souhaitée en N-NH4 soit atteinte, ou que le temps maximum d'aération TM soit atteint.

2. Procédé selon la revendication 1, **caractérisé en ce que** le coefficient k est choisi avec une valeur moyenne comprise entre 0,1 et 0,25.

3. Procédé selon la revendication 1 ou 2, **caractérisé en ce que** le temps d'aération représente 30% du temps total d'un cycle de 8 heures comportant 4 sous-cycles.

4. Procédé selon l'une quelconque des revendications précédentes, **caractérisé en ce que**, dans chaque sous-cycle, la première étape aérée est suivie d'une deuxième étape non aérée, en anoxie, au cours de laquelle les nitrites produits et l'ammonium sont convertis en azote gazeux par dé-ammonification, sans apport de substrat carboné.

5. Procédé selon la revendication 4, **caractérisé en ce que** le dernier sous-cycle est effectué en tenant compte des résultats des sous-cycles précédents :

> - si la charge admise lors des sous-cycles précédents a été traitée quasiment en totalité, l'évaluation étant faite d'après la concentration en ammonium à la fin de l'avant-dernier sous-cycle, qui de préférence doit être inférieure ou égale à 5mg/L, une nouvelle charge d'ammonium est introduite lors d'une phase d'alimentation du dernier sous-cycle, pour traitement en aération puis anoxie,
> - tandis que, si la charge admise lors des sous-cycles précédents n'a été que partiellement traitée, et que la concentration en ammonium résiduel est importante, de préférence supérieure à 5mg/L, le dernier sous-cycle est utilisé pour traiter cette charge résiduelle, sans phase d'alimentation.

**Patentansprüche**

1. Verfahren zur Behandlung von Abwässern, die Stickstoff in Form von Ammonium enthalten, bei dem ein sequenzieller biologischer Reaktor eingesetzt wird, wobei:

> - ein Volumen von in einem kompletten Kreislauf zu behandelnden Abwässern entsprechend einem oder mehreren aufeinanderfolgenden Volumenanteilen in den biologischen Reaktor eingeleitet wird, wobei jeder Volumenanteil im Verlauf eines Unterkreislaufs behandelt wird,
> - jeder Unterkreislauf einen Schritt des Einspeisens von einem Volumenanteil und wenigstens einen ersten Belüftungsschritt umfasst, in dem eine vollständige oder partielle Oxidation des Ammoniums zu Nitriten durch Einspritzung von Luft oder Sauerstoff in das Abwasser erfolgt,
> - ein Schritt zur Dekantierung und Entleerung am Ende des kompletten Kreislaufs erfolgt,

**dadurch gekennzeichnet, dass**

> - die zu behandelnde $N-NH_4$-Masse auf der Grundlage des Abwasservolumens im Reaktor am Ende des Schritts des Einspeisens und der Differenz zwischen der im Reaktor gemessenen Anfangskonzentration des $N-NH_4$ und einer am Ende des Belüftungsschritts gewünschten Konzentration bestimmt wird, wobei die am Ende des Belüftungsschritts gewünschte Konzentration des $N-NH_4$ zwischen 40% und 60% der Anfangskonzentration des $N-NH_4$ beträgt,
> - eine maximale Belüftungsdauer $T_M$ für den Belüftungsschritt vorgesehen ist, wobei die Dauer $T_M$ entsprechend der Gesamtdauer des Kreislaufs des sequentiellen biologischen Reaktors SBR und der Anzahl der Unterkreisläufe festgelegt wird,
> - und ein Anfangsluftdurchsatz $Qair_{init}$ für das Starten des Belüftungsschritts unter Berücksichtigung der Masse des zu behandelnden $N-NH_4$ und der maximalen Belüftungsdauer $T_M$ entsprechend folgender Formel berechnet wird:

$$Qair_{init} = k \times \text{Masse des zu behandelnden } N\text{-}NH_4 \times 60/T_M$$

wobei:

> $Qair_{init}$ = anzuwendender Anfangsluftdurchsatz, in $Nm^3/h$ ($m^3$ Normkubikmeter pro Stunde)

k = Koeffizient zwischen 0,1 und 0,5,

Masse des zu behandelnden $N-NH_4$, angegeben in Gramm

$T_M$ angegeben in Minuten

und, im Fall einer Einspritzung von Sauerstoff, der Sauerstoffdurchsatz von $Qair_{init}$ und dem Sauerstoffgehalt der Luft subtrahiert wird;

- während des Belüftungsschritts nach einer gewissen Belüftungsdauer, die Nitratkonzentration einen maximal zulässigen Wert von 4 mg/L überschreitet und der eingespritzte Luftdurchsatz reduziert wird
- während der gesamten verbleibenden Belüftungsdauer die Berechnung des Luftdurchsatzes Qair entsprechend der Restsauerstoffkonzentration angepasst wird, die in einem definierten Bereich zwischen 0,1 mg $O_2$/L und 0,6 mg $O_2$/L gehalten wird, wobei der Wert der Restsauerstoffkonzentration seinerseits derart angepasst wird, dass der Unterschied zwischen dem Mittelwert zu einem Zeitpunkt der Behandlung in dem Belüftungsschritt, und der Anfangskonzentration der Nitrate nicht signifikant ist, wobei ein Unterschied als signifikativ betrachtet wird, wenn er einem Anstieg der Nitratkonzentration von wenigstens 2 mg/L nach einer Belüftungsdauer von 10 Minuten entspricht, die Belüftungsbedingung aufrechterhalten wird, bis die gewünschte Konzentration des $N-NH_4$ erreicht oder die maximale Belüftungsdauer $T_M$ erreicht wird.

2. Verfahren gemäß Anspruch 1, **dadurch gekennzeichnet, dass** der Koeffizient k mit einem durchschnittlichen Wert zwischen 0,1 und 0,25 gewählt wird.

3. Verfahren gemäß Anspruch 1 oder 2, **dadurch gekennzeichnet, dass** die Belüftungsdauer 30% der Gesamtdauer eines Kreislaufs von 8 Stunden beträgt, welcher 4 Unterkreisläufe umfasst.

4. Verfahren gemäß einem oder mehreren der vorherigen Ansprüche, **dadurch gekennzeichnet, dass** während jedes Unterkreislaufs, auf den ersten Belüftungsschritt ein zweiter anaerober, nicht belüfteter Schritt folgt, während dem die erzeugten Nitrite und das Ammonium durch Deammonifikation ohne Hinzufügung eines Kohlenstoffsubstrats in gasförmigen Stickstoff umgewandelt werden.

5. Verfahren gemäß Anspruch 4, **dadurch gekennzeichnet, dass** der letzte Unterkreislauf unter Berücksichtigung der Ergebnisse der vorangegangenen Unterkreisläufe durchgeführt wird, wobei:

- wenn die während der vorangegangenen Unterkreisläufe eingeleitete Charge beinahe vollständig bearbeitet wurde, die Beurteilung entsprechend der Ammoniumkonzentration, die vorzugsweise kleiner oder gleich 5mg/L sein sollte, am Ende des vorletzten Unterkreislaufs erfolgt, eine neue Ammoniumcharge während einer Einspeisephase des letzten Unterkreislaufs zur aeroben und anschließend zur anaeroben Behandlung eingeleitet wird,
- während, wenn die während der vorangegangenen Unterkreisläufe eingeleitete Charge nur teilweise behandelt wurde, und die Restammoniumkonzentration hoch ist, vorzugsweise größer als 5mg/L, der letzte Unterkreislauf zur Behandlung dieser Restcharge ohne Einspeisephase verwendet wird.

## Claims

1. A process for treating effluents containing nitrogen in ammonium form, employing a sequential bioreactor; in said process:

- a volume of effluents to be treated in a complete cycle is introduced into the bioreactor, in one or more successive volume fractions, each volume fraction being treated during a subcycle,
- each subcycle comprises a phase of supply with a volume fraction, and at least one first aerated step, during which full or partial oxidation of the ammonium to nitrites takes place by injection of air or oxygen into the effluent,
- a decanting and emptying step taking place after the end of the complete cycle, **characterized in that**:
- the weight of $N-NH_4$ to be treated is determined from the volume of effluents in the reactor at the end of the supply phase, and from the difference between the initial concentration of $N-NH_4$ measured in the reactor and a desired concentration at the end of the aerated step, the desired concentration at the end of the aerated step being between 40% and 60% of the initial concentration of
- a maximum aeration time $T_M$ is dedicated to the aerated step, the time $T_M$ being fixed, selected as a function of the total cycle time of the sequential bioreactor SBR and the number of subcycles
- and an initial air flow rate $Qair_{init}$, for the start of the aerated step, is determined taking into account the weight

of $N-NH_4$ to be treated and the maximum aeration time $T_M$, from the following formula:

$$Qair_{init} = k \times weight\ of\ N\text{-}NH_4\ to\ be\ treated \times 60/T_M$$

where:

Qair$_{init}$ = initial air flow rate to be applied, in $Nm^3/h$ (normal $m^3$ per hour)
k = coefficient between 0.1 and 0.5,
weight of $N-NH_4$ to be treated, expressed in grams
$T_M$ expressed in minutes
and, in the case of injection of oxygen, the oxygen flow rate is deduced from Qair$_{init}$ and the oxygen content of the air,

- during the aerated step, after a certain aeration time, the concentration of nitrates exceeds a maximum permissible value of about 4 mg/L and the injected air flow rate is reduced,
- throughout the remaining period of aeration step, the calculation of the air flow rate $Q_{air}$ is adjusted as a function of the value of the residual oxygen concentration maintained in a defined range, comprised between 0.1 mg O2/L and 0.6 mg O2/L, the value of the residual oxygen concentration being itself adjusted such as the difference between the average value at a time point of the treatment in the aerated step, and the initial value of the concentration of nitrates is not significant, a difference being considered significant when it corresponds to an increase in the concentration of nitrates of at least 2 mg/L after 10 minutes of aeration, the aeration condition is maintained until the desired concentration of is reached, or until the maximum aeration time TM is reached.

2. The process as claimed in claim 1, **characterized in that** the coefficient k is selected with an average value between 0.1 and 0.25.

3. The process as claimed in claim 1 or 2, **characterized in that** the aeration time represents 30% of the total cycle time of 8 hours comprising 4 subcycles.

4. The process as claimed in any one of the preceding claims, **characterized in that**, in each subcycle, the first aerated step is followed by a second unaerated step, in anoxic conditions, during which the nitrites produced and the ammonium are converted to gaseous nitrogen by deammonification, without supply of carbon-containing substrate.

5. The process as claimed in claim 4, **characterized in that** the last subcycle is carried out taking into account the results of the preceding subcycles:

- if the feed admitted during the preceding subcycles has been treated almost completely, the evaluation being based on the ammonium concentration at the end of the penultimate subcycle, which preferably must be less than or equal to 5 mg/L, a new ammonium feed is introduced during a supply phase of the last subcycle, for treatment in aeration and then in anoxic conditions,
- whereas if the feed admitted during the preceding subcycles has only been treated partially, and the residual ammonium concentration is high, preferably above 5 mg/L, the last subcycle is used for treating this residual feed, without a supply phase.

FIG.1

FIG.2

FIG.3

FIG.4

FIG.5

## RÉFÉRENCES CITÉES DANS LA DESCRIPTION

**Documents brevets cités dans la description**

- WO 2009080912 A